# EUROPEAN PATENT APPLICATION

(11) **EP 4 611 193 A1**
(43) Date of publication of application: **03.09.2025**
(21) Application number: 24160627.6
(22) Date of filing: 29.02.2024
(51) Int. Cl.: H02G 1/12

(54) **DEVICE AND METHOD FOR REMOVING SHIELDING FOIL FROM AN ELECTRICAL CABLE**

(71) Applicant: Aptiv Technologies AG, 8200 Schaffhausen (CH)
(72) Inventor: SILVA, Antonio Jose, 2735-609 Agualva (PT); SANTOS, Joao, 2670-395 Loures (PT)
(74) Representative: INNOV-GROUP

(57) **Abstract**

Device and method for removing a section of shielding foil from a shielded electrical cable, comprising :
- a heating wheel (10) with a circumferential bearing rim for bearing on the shielding foil (5);
- a pressure support (15) adapted to bring the circumferential bearing rim (23) of the heating wheel (10) into contact with the shielding foil (5) on a stripped portion (7) of the shielded electrical cable (1);
- a rotating element adapted to rotate the heating wheel (10) on a separation contour (8) of the shielding foil (5).

## Description

### TECHNICAL FIELD

The invention relates to the field of electrical cables, and more particularly to devices and methods for stripping shielded electrical cable.

In addition to insulation layers, some shielded electrical cables include shielding layers, in particular a tubular shielding foil, usually made from a metal foil such as aluminum foil. Operations designed to strip and connect this cable may involve removing a section of this shielding foil from a stripped portion of the electrical cable.

### PRIOR ART

Removal of a section of shielding foil from a shielded electrical cable is generally carried out by method involving mechanical cutting of the shielding foil, which are risky for the electrical cable, or by method involving lasers, which are costly and slow.

The document EP3444911 describes a method and a device for removing a section of a shielding foil from a shielded electrical cable, using heating means.

These method and devices can be improved in terms of operational reliability, i.e. the guarantee that the shielding foil can be removed without damaging the other layers of the electrical cable, and in terms of flexibility, particularly in an industrial production context.

### DISCLOSURE OF THE INVENTION

The purpose of the invention is to improve the devices and method of the prior art.

To this end, the invention relates to a device for removing a section of shielding foil from a shielded electrical cable, comprising:
- a heating wheel with a circumferential bearing rim for bearing on the shielding foil;
- a pressure support adapted to bring the circumferential bearing rim of the heating wheel into contact with the shielding foil on a stripped portion of the shielded electrical cable;
- a rotating element adapted to rotate the heating wheel on a separation contour of the shielding foil.

According to another object, the invention relates to a method of removing a section of shielding foil from a shielded electrical cable, comprising the following steps:
- press the circumferential edge of a hot heating wheel against a stripped portion of the shielded electrical cable on the shielding foil;
- cause relative rotation of the heating wheel and the shielding foil so that the circumferential bearing rim of the heating wheel rolls on the surface of the shielding foil along a separation contour, over at least one revolution.

The invention makes it possible to form a clean groove on a separation contour of the shielding foil, without the risk of damaging the lower layers of the electrical cable.

The mechanical action of the wheel, acting by rolling on the surface of the shielding foil, coupled with a supply of heat, enables separation without cutting. The circumferential bearing rim of the heating wheel enables this mechanical rolling action, as its surface is free of sharp edges or other elements that could injure the cable.

The invention makes it possible to implement devices and methods for removing a section of a shielding foil that are fast, inexpensive and suitable for industrial implementation, for example when manufacturing cables and connecting them to connectors.

The devices according to the invention are flexible, allowing the treatment of all types of cables, are adapted to work with different thicknesses and different configurations of shielding foils. The device can be configured regarding the number of rotations of the heating wheel on the shielding foil, the rolling speed, the heating temperature and the pressure exerted by the heating wheel.

Methods according to the invention enable productivity gains on the production line: they are faster and less costly than laser method; and, with equal safety, they are faster than method with mechanical cutting.

The device according to the invention may comprise the following additional features, alone or in combination:
- the heating wheel is freely rotatably mounted on an arm of the pressure support;
- the pressure support comprises a base on which said arm is slidably mounted with an elastic element;
- the rotating element comprises a plate on which the pressure support is mounted so as to be translatable;
- the heating wheel comprises a metal disk fitted with heating inserts;
- the circumferential bearing rim of the heating wheel is a cylindrical surface;
- the circumferential bearing rim of the heating wheel is a toroidal portion;
- the circumferential bearing rim has a radius of curvature at least equal to the radius of the heating wheel;
- the heating wheel has a thickness of at least 0.5 mm;
- the heating wheel is adapted to be heated to a temperature between 300°C and 600°C;
- the pressure support is adapted to press the heating wheel onto the shielding foil with a maximum force of 10 N;
- it comprises jaws for positioning the shielded electrical cable.

### PRESENTATION OF FIGURES

Further features and advantages of the invention will be apparent from the following non-limiting description, with reference to the drawings in which :
- Figure 1 is an illustrative view of the end of a shielded electrical cable with a stripped portion;
- Figure 2 and Figure 3 illustrate a device according to the invention in side view and front view, respectively;
- Figure 4 illustrates an alternative stop for the device according to the invention;
- Figure 5 and Figure 6 show an example of a pressure support for the device according to the invention, in side view and in front view respectively;
- figure 7 and figure 8 are partial profile views of a heating wheel, illustrating two examples of circumferential bearing rims.

Elements which are similar and common to the various embodiments bear the same figure reference numbers.

### DETAILED DESCRIPTION

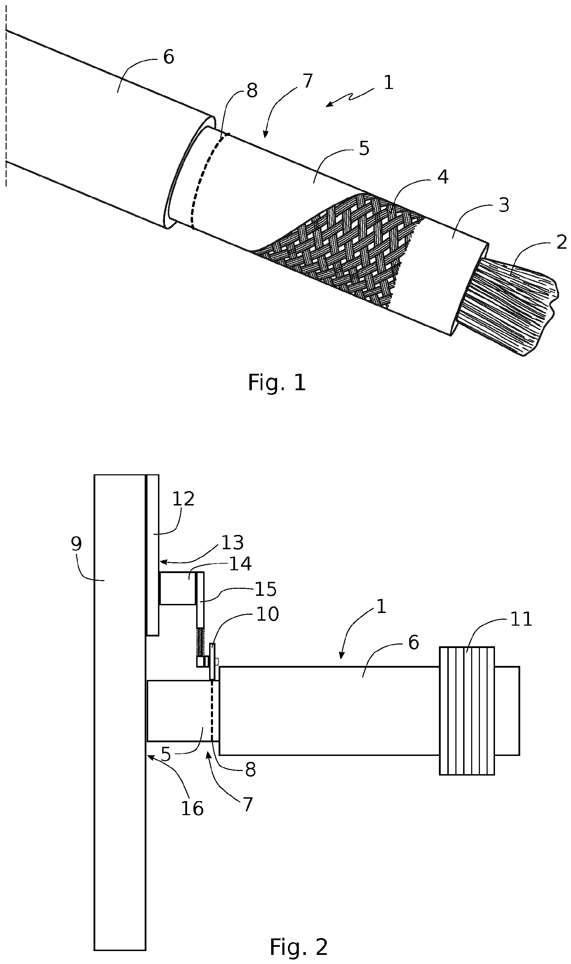

Figure 1 illustrates the end of a shielded electrical cable 1 suitable for implementing the device and method according to the invention. This illustrative example of a shielded electrical cable 1 comprises a central conductor 2, an insulating sheath 3, a shielding braid 4, a shielding foil 5 and an outer insulating sheath 6.

The invention is particularly suited to shielded electrical cables which comprise a shielding braid 4 surrounded by a shielding foil 5.

Shielding foil 5 is common in the field of shielded electrical cables and is generally made of an aluminum foil, possibly laminated with one or more layers of a polymer. Its thickness is generally around 0.1 to 0.2 mm.

In Figure 1, the electrical cable 1 has been stripped for illustrative purposes, revealing the end of the central conductor 2, and uncovering a stripped portion 7 that makes the shielding foil 5 accessible.

Following these stripping steps, the method and device according to the invention make it possible to extract the section of shielding foil 5 that extends between a separation contour 8 (illustrated in dotted lines on the figures) and the end of the cable, so as to give access to the shielding braid 4. This operation of removing a section of the shielding foil 5 takes place without any risk to the shielding braid 4 or to other elements such as, in this example, the insulating sheath 3.

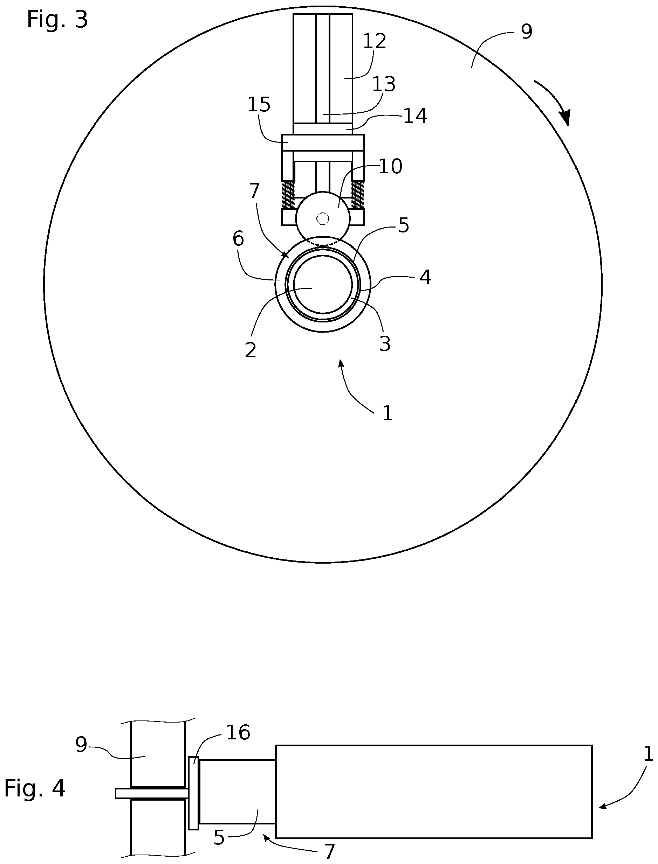

Figure 2 and figure 3 illustrate, from the side and front respectively, a device according to the invention, enabling the removal of a section of shielding foil. A shielded electrical cable 1 is placed in the device, with a stripped portion 7 allowing access to the shielding foil 5, with a view to removing a section of this shielding foil.

In the present description, the direction referred to as axial is the longitudinal axis in which the electrical cable 1 extends, and the radial direction is a direction orthogonal to the axial direction.

In this example, the device comprises a plate 9 forming a support for a heating wheel 10. In this example, plate 9 is rotatable about the axial direction.

The device also includes means for positioning the shielded electrical cable 1. In this example, jaws 11 enable the cable 1 to be clamped and positioned in the axial direction, so that the heating wheel 10 can act on the electrical cable 1. In the schematic example shown, the jaws 11 are schematically illustrated, it being understood that the jaws may comprise any known means for holding the electric cable 1 in place, with the necessary clamping and creating a sufficient reaction to the support of the heating wheel 10.

The heating wheel 10 is mounted on the plate 9 by means of elements allowing radial displacement of the heating wheel 10. In the present example, the heating wheel 10 is mounted on the plate 9 by means of a base 12 comprising a slide 13. A slide 14 is mounted in this guide 13, and a pressure support 15 is mounted on this slide 14.

The heating wheel 10 is mounted on this pressure support 15, free to rotate on an axis 21, and is adapted to roll on the separation contour 8.

Plate 9 can be of any shape suitable for carrying support 12 and rotating it about the axial direction. In this example, plate 9 is formed by a rigid disc.

Plate 9 has a central stop 16 for the end of cable 1. In Figures 2 and 3, the stop 16 is fixed and is formed by a central portion of the plate 9. The device is here dimensioned so that the axial distance between the stop 16 and the plane in which the heating wheel 10 extends is adapted to position the separation contour 8 to correspond to the section of shielding foil 5 to be extracted.

Alternatively, as shown in Figure 4, the stop 16 can be moved axially, in the illustrated example by means of a cylinder 17. The axial position of the separation contour 8 is thus adjustable.

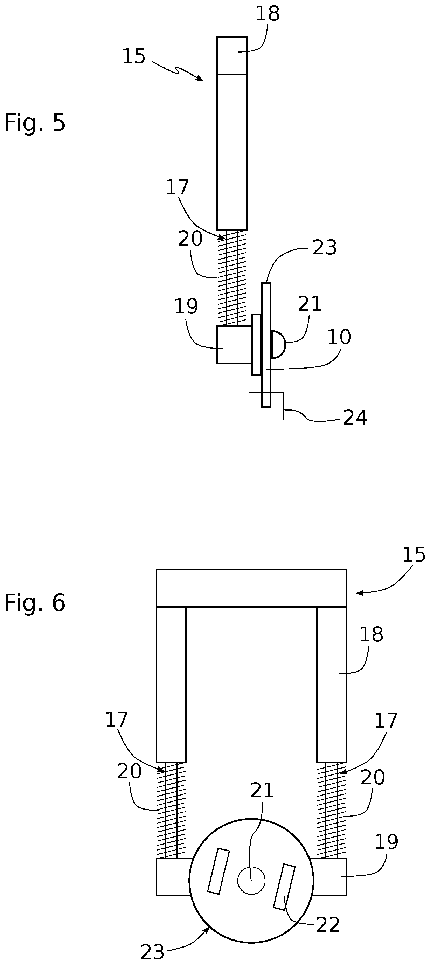

Figures 5 and 6 show the pressure support 15 and the heating wheel 10 in profile and from the front, respectively.

The pressure support 15 comprises a base 18 (fixed to the slide 14), and a movable arm 19. In the present example, the movable arm 19 is mounted on two slides, and thus slides relative to the base 18.

The movable arm 19 is moved away from the base 18 by elastic elements 20. In the present example, the elastic elements 20 consist of two springs arranged on the slide rails. The movable arm 19 is thus pushed away from the base 18 to a position of maximum opening, illustrated in Figures 5 and 6. The movable arm 19 and the base 18 preferably have mecanical stops corresponding to this maximum opening position.

When the movable arm 19 is urged towards the base 18, it compresses the elastic elements 20, which calibrate the reaction force of the movable arm 19 on the urging element.

The movable arm 19 comprises the axis of rotation 21 on which the heating wheel 10 is rotatably mounted. The axis of rotation 21 can be constituted by any suitable means, for example a bearing, a low-friction ring, or a mechanical adjustment enabling the heating wheel 10 to be pivotally connected to the axis of rotation 21.

The heating wheel 10 includes heating means for adjustably heating the heating wheel 10 to a temperature preferably in the range of 300°C to 600°C, and preferably around 400°C. In the illustrated example, these heating means comprise inserts 22 which are, for example, heating resistors supplied electrically by a connector rotating at the level of the axis of rotation 21. Alternatively, the inserts 22 may be elements heated by an inductor external to the heating wheel 10, or the heating wheel 10 may be heated directly by thermal radiation from the outside. Any other known means can also be used to create these heating elements.

The heating wheel is adapted to diffuse the heat produced. Preferably, the heating wheel consists of a metal disc.

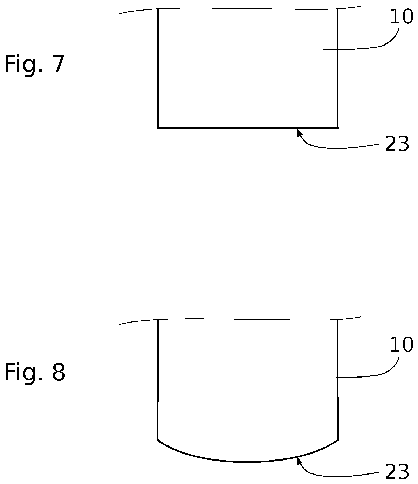

Figure 7 and figure 8 are two illustrative examples of the circumferential bearing rim 23 of the heating wheel 10, as seen in detail from the inset 24 of figure 5. The circumferential bearing rim 23 of the heating wheel 10 is the surface constituting the edge of the heating wheel 10.

The circumferential bearing rim 23 is defined as a surface adapted to rest on another part, without mechanically injuring this part, and in particular without cutting or penetrating the material of this part. The circumferential bearing rim 23 is therefore necessarily devoid of sharp or cutting edges.

In the example shown in Figure 7, the circumferential bearing rim 23 is a straight edge, and consists of a cylindrical surface.

In the example shown in Figure 8, the circumferential bearing rim 23 has a rounded profile, and is therefore made up of a portion of a torus. In this example, the radius of curvature of this rounded profile must be sufficiently large to ensure the support function. Preferably, this radius of curvature is at least equal to the radius of the heating wheel 10.

In addition, the heating wheel 10 preferably has a minimum thickness to ensure damage-free bearing on a substrate. In the case of conventional shielding foils 5, the heating wheel 10 preferably has a minimum thickness of 0.5 mm.

The implementation of the invention is made possible by the free rotation capability of the heating wheel 10 and the presence of the circumferential bearing rim 23, which is adapted to rest on its support without damage, during this free rotation.

The method according to the invention is described below.

A shielded electrical cable 1 is first inserted into the jaws 11 and its stripped end is placed against the stop 16 so that the heating wheel 10 is axially positioned at the separation contour 8. The electrical cable 1 has a stripped portion 7, revealing the shielding foil 5.

Slider 14 is then moved radially on slide 13 so that heating wheel 10 comes into contact with shielding foil 5 at separation contour 8. The movement of slide 14 on guide 13 is preferably motorized to an accuracy of the order of 0.01 mm to precisely position pressure support 15, taking into account the thickness of shielding foil 5.

The elastic elements 20 are then compressed and exert a pressure that brings the circumferential bearing rim 23 of the heating wheel 10 into contact with the shielding foil 5. The elastic elements 20 are calibrated to exert a reaction force on the support, corresponding to the force exerted by the heating wheel 10 on the shielding foil 5. This force varies little despite the inevitable irregularities in the diameter on which the heating wheel 10 rests during rotation. Preferably, the elastic elements 20 are calibrated so that the heating wheel 10 exerts a force of less than 10 N on the shielding foil 5, enabling the heating wheel 10 to roll without slipping and without damaging the support.

The heating wheel 10 is then brought to its working temperature, preferably around 400°C as described above, and the platen 9 is rotated so that the circumferential bearing rim 23 rolls without slipping on the shielding foil 5. In practice, 1 to 5 revolutions of the heating wheel 10 on the contour 8 are preferably performed.

The rotation speed of the heating wheel 10 is preferably chosen to correspond to a period around 3 to 5 seconds per revolution.

The combination of non-slip rolling, the temperature of the heating wheel 10, and the action of the circumferential bearing rim 23, together enable a clean break in the shielding foil 5 at the separation contour 8.

After this break, the heating wheel 10 can come into contact with the shielding braid 4 without any risk to the latter, thanks to the circumferential bearing rim 23, which is designed not to injure the shielding braid 4.

The cable 1 is then extracted from the device, and the section of shielding foil 5 released by the breaking of the separation contour 8 can then be extracted by any known means, e.g. manually or automatically using a gripping tool.

Alternative designs are also possible. For example, the rotation enabling the heating wheel 10 to roll on the shielding foil 5 is a relative rotation, with the plate 9 rotating with respect to the electric cable 1, or the electric cable 1 rotating with respect to the plate 9.

In addition, the support force of the heating wheel 10 can be calibrated by any other means, for example by a controllable slide 13, without the need for elastic elements 20.

## Claims

1. Device for removing a section of shielding foil from a shielded electrical cable, **characterized in that** it comprises :
- a heating wheel (10) with a circumferential bearing rim (23) for bearing on the shielding foil (5);
- a pressure support (15) adapted to bring the circumferential bearing rim (23) of the heating wheel (10) into contact with the shielding foil (5) on a stripped portion (7) of the shielded electrical cable (1);
- a rotating element adapted to rotate the heating wheel (10) on a separation contour (8) of the shielding foil (5).

2. Device according to claim 1, **characterized in that** the heating wheel (10) is freely rotatably mounted on an arm (19) of the pressure support (15).

3. Device according to claim 2, **characterized in that** the pressure support (15) comprises a base (18) on which said arm (19) is slidably mounted with an elastic element (20).

4. Device according to one of the preceding claims, **characterized in that** the rotating element comprises a plate (9) on which the pressure support (15) is mounted so as to be translatable.

5. Device according to one of the preceding claims, **characterized in that** the heating wheel (10) comprises a metal disk fitted with heating inserts (22).

6. Device according to one of the preceding claims, **characterized in that** the circumferential bearing rim (23) of the heating wheel (10) is a cylindrical surface.

7. Device according to one of claims 1 to 5, **characterized in that** the circumferential bearing rim (23) of the heating wheel (10) is a toroidal portion.

8. Device according to claim 7, **characterized in that** the circumferential bearing rim (23) has a radius of curvature at least equal to the radius of the heating wheel (10).

9. Device according to one of the preceding claims, **characterized in that** the heating wheel (10) has a thickness of at least 0.5 mm.

10. Device according to one of the preceding claims, **characterized in that** the heating wheel (10) is adapted to be heated to a temperature between 300°C and 600°C.

11. Device according to one of the preceding claims, **characterized in that** the pressure support (15) is adapted to press the heating wheel (10) onto the shielding foil (5) with a maximum force of 10 N.

12. Device according to one of the preceding claims, **characterized in that** it comprises jaws (11) for positioning the shielded electrical cable (1).

13. A method of removing a section of shielding foil from a shielded electrical cable (1), **characterized in that** it comprises the following steps:
- press the circumferential edge (23) of a hot heating wheel (10) against a stripped portion (7) of the shielded electrical cable (1) on the shielding foil (5);
- cause relative rotation of the heating wheel (10) and the shielding foil (5) so that the circumferential bearing rim (23) of the heating wheel (10) rolls on the surface of the shielding foil (5) along a separation contour (8), over at least one revolution.
